(19) Europäisches Patentamt
European Patent Office
Office européen des brevets

(11) **EP 1 590 223 B1**

(12) **FASCICULE DE BREVET EUROPEEN**

(45) Date de publication et mention
de la délivrance du brevet:
**16.12.2009   Bulletin 2009/51**

(21) Numéro de dépôt: **04708788.7**

(22) Date de dépôt: **06.02.2004**

(51) Int Cl.:
***B60T 13/66*** *(2006.01)*      ***B60T 7/10*** *(2006.01)*
***B60T 13/74*** *(2006.01)*      ***B60T 7/12*** *(2006.01)*

(86) Numéro de dépôt international:
**PCT/FR2004/000278**

(87) Numéro de publication internationale:
**WO 2004/071835 (26.08.2004 Gazette 2004/35)**

(54) **SYSTEME DE GESTION DE L'ETAT ET DU FONCTIONNEMENT D'UN VEHICULE AUTOMOBILE**

VERWALTUNGSSYSTEM EINES FARHZEUGS

SYSTEM FOR CONTROLLING THE STATE AND OPERATION OF A MOTOR VEHICLE

(84) Etats contractants désignés:
**AT BE BG CH CY CZ DE DK EE ES FI FR GB GR
HU IE IT LI LU MC NL PT RO SE SI SK TR**

(30) Priorité:   **07.02.2003   FR 0301487**

(43) Date de publication de la demande:
**02.11.2005   Bulletin 2005/44**

(73) Titulaire: **Peugeot Citroën Automobiles SA
78943 Vélizy-Villacoublay Cedex (FR)**

(72) Inventeurs:
• **HERNETTE, Vincent
F-75014 Paris (FR)**
• **BAILLEUX, François
F-91400 Val d'Albian (FR)**
• **ABADIE, Vincent
F-78500 Sartrouville (FR)**

(56) Documents cités:
**DE-A- 3 440 081      DE-A- 10 038 786
DE-A- 19 632 863      DE-A- 19 906 227**

EP 1 590 223 B1

**Description**

La présente invention concerne un système de gestion de l'état et du fonctionnement d'un véhicule automobile.

Elle concerne plus particulièrement un système de gestion de maintien à l'état immobilisé d'un véhicule automobile lorsque sa vitesse décroît jusqu'à l'arrêt du véhicule qui est doté d'un dispositif de freinage dynamique et d'un dispositif de freinage statique.

On assiste actuellement à une automatisation croissante des véhicules automobiles dans le but d'augmenter la sécurité et le confort de ces véhicules.

Cependant, cette automatisation est limitée par des raisons de poids, de coût et/ou de difficultés d'implantation.

Il en est ainsi par exemple pour un véhicule automobile selon lequel la décélération du véhicule est assurée par le dispositif de freinage statique qui comprend généralement un moto-réducteur électrique entraînant au moins un câble d'actionnement d'un frein de parking agissant sur les roues arrière du véhicule et un dispositif d'anti-blocage de roues permettant de doser les efforts dans le câble d'actionnement du frein de parking en surveillant la vitesse des roues. Une telle architecture connue est onéreuse du fait qu'il est nécessaire de prévoir un dispositif de freinage statique devant avoir une bonne dynamique, c'est-à-dire une puissance moteur capable de générer les efforts de freinage dans le ou les câbles d'actionnement en un temps très court, par exemple en moins de 500 millisecondes.

On connait notamment du document DE 10 038 786 un système comprenant un certain nombre de capteurs embarqués sur le véhicule, tels que par exemple un capteur de décélération longitudinale du véhicule, au moins un capteur de vitesse de rotation de l'une des roues du véhicule, un capteur de débattement des roues du véhicule relativement à la caisse de celui-ci, et un capteur de pression du maître-cylindre, un dispositif de pilotage recevant des informations des différents capteurs et apte à déterminer, à partir de ces informations et, le cas échéant, de celles représentatives des états des pédales de frein et d'accélération du véhicule, l'état du véhicule et à calculer des consignes de freinage transmises aux dispositifs de freinage dynamique et statique permettant notamment de maintenir immobilisé le véhicule dès que sa vitesse est nulle, de redémarrer le véhicule après un arrêt de celui-ci, de provoquer une décélération contrôlée du véhiculé ou d'assurer une sûreté de freinage du véhicule à l'arrêt de celui-ci.

La présente invention a pour but d'éliminer les inconvénients ci-dessus des systèmes connus.

A cet effet, l'invention propose un système de gestion de l'état et du fonctionnement d'un véhicule automobile doté d'un dispositif de freinage dynamique et d'un dispositif de freinage statique, selon la revendication 1.

En outre, le dispositif de pilotage est apte à immobiliser le véhicule dès que sa vitesse est nulle en freinant ce dernier par actionnement de son dispositif de freinage statique lorsque le véhicule se trouve sur une pente relativement faible, par exemple inférieure à 3 %.

Le dispositif de pilotage permet de déterminer la pente sur laquelle se déplace le véhicule en calculant la différence entre la valeur de décélération longitudinale du véhicule fournie par le capteur de décélération longitudinale et la valeur de décélération longitudinale calculée à partir du capteur de vitesse de rotation d'une roue du véhicule pour déterminer une valeur de décalage de décélération longitudinale $\gamma_{longipente}$ et en calculant la pente suivant la formule :

$$pente[\%] = 100x \tan\left\{\arcsin\left(\frac{\gamma longipente}{g}\right)\right\}$$

Le dispositif de pilotage permet d'analyser l'évolution de la pente calculée pour vérifier sa cohérence avec la distance parcourue par le véhicule afin de ne prendre en compte pour l'immobilisation du véhicule une faible distance parcourue par celui-ci pour un écart de pente calculé, en utilisant la formule suivante :

où $\underline{a}$ est l'empattement du véhicule, et
$\underline{b}$ est la distance parcourue par le véhicule.

$$\Delta pente = \text{Arc} \cos\left(\frac{b - \Delta b}{a}\right) - \text{Arc} \cos\left(\frac{b}{a}\right)$$

Ce dispositif de pilotage calcule une correction de la valeur de décélération longitudinale fournie par le capteur correspondant à partir des capteurs de débattement des roues avant et arrière relativement à la caisse du véhicule suivant la formule :

$$\gamma_{longi\ cap\ corr} = \gamma_{longi\ capteur} - \sin\left(\arctan\left(\frac{Z_{av} - Z_{av}}{a}\right)\right)$$

où Zav est le débattement des roues avant,
Zar est le débattement des roues arrière, et
a est l'empattement du véhicule.

Le dispositif de pilotage est adapté pour calculer une consigne de pression de freinage optimisée appliquée au dispositif de freinage dynamique en fonction de la pente sur laquelle se déplace le véhicule et d'une estimation de l'efficacité du freinage globale du véhicule déterminée par la décélération longitudinale du véhicule pour une pression de freinage donnée résultant de l'enfoncement de la pédale de frein par le conducteur du véhicule lors des opérations de freinage de ce dernier.

Le dispositif de pilotage optimise la consigne de pression de freinage à une valeur juste nécessaire pour maintenir le véhicule à l'arrêt, majorée d'un facteur multiplicatif de sécurité de façon que la pression de freinage appliquée au dispositif de freinage dynamique soit au-dessus de la zone de bruits de freinage.

Le dispositif de freinage dynamique est activé par le dispositif de pilotage de manière à appliquer la consigne de freinage aux quatre roues du véhicule et lorsque le dispositif de freinage dynamique est désactivé, la pression de freinage chute brutalement en-dessous de la zone de bruits, puis diminue plus lentement jusqu'à une valeur nulle.

Lors d'une décélération du véhicule, le dispositif de pilotage calcule une valeur de décélération à partir de chacun des capteurs de vitesse des roues du véhicule suivant la formule :

$$\gamma_{longiroues} = 2\ \frac{2\pi R}{N}\ x\ \frac{\dfrac{1}{Tn} - \dfrac{1}{Tn-1}}{Tn + Tn - 1}\ -$$

où R est le rayon de roulement de la roue,
N est le nombre de tops par tour du capteur, et
Tn, Tn-1 sont les périodes respectivement présente et passée du signal carré fourni par le capteur, inversement proportionnelles à la vitesse de rotation de la roue,
le dispositif de pilotage effectuant une moyenne des quatre valeurs calculées de décélération longitudinale pour les quatre roues et calculant la vitesse du véhicule à partir de chaque valeur calculée de décélération suivant la formule :

$$v(t) = \frac{2\pi R}{NTn}\ x\gamma_{longi\ roues}\ \frac{Tn + t}{2}$$

où t est le temps écoulé depuis le dernier front de montée du signal carré du capteur,
et le dispositif de pilotage effectue une moyenne des quatre valeurs calculées de vitesse du véhicule.

Le dispositif de freinage statique comprend un moto-réducteur électrique entraînant au moins un câble d'actionnement d'un frein de parking agissant sur les roues arrière du véhicule et le dispositif de pilotage calcul l'effort de serrage dans le câble en déterminant le couple en sortie du moteur électrique à partir de l'intensité du courant électrique du moteur et du rendement du réducteur de ce dernier.

Le dispositif de pilotage actionne le dispositif de freinage statique lorsque le conducteur actionne le bouton de commande de ce dernier et que le conducteur appuie simultanément sur la pédale de frein, pour assurer un mode de secours lorsque le dispositif de freinage dynamique est hors service.

Le dispositif de pilotage maintient activé le dispositif de freinage dynamique et/ou statique si le conducteur amène le levier sélecteur de la boîte de vitesses en position de point à mort ou neutre à l'arrêt du véhicule et le dispositif de pilotage n'active aucun des dispositifs de freinage dynamique et statique si le véhicule s'arrête en position de point à mort ou neutre de ce levier.

Le dispositif de pilotage applique au dispositif de freinage dynamique et/ou au dispositif de freinage statique une consigne de pression de freinage plus importante en cas de surcharge du véhicule signalée au dispositif dé pilotage par une action manuelle du conducteur, telle qu'une pression pendant une durée déterminée sur un bouton de commande du dispositif de freinage statique.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

- la figure 1 est un schéma illustrant des composants d'un véhicule automobile auxquel peut s'appliquer le système de l'invention ;
- la figure 2 représente sous forme de schéma-blocs l'architecture du système de l'invention permettant de gérer l'état du fonctionnement d'un véhicule automobile doté d'un dispositif de freinage dynamique et d'un dispositif de freinage statique ;
- les figures 3A et 3B représentent deux chronogrammes illustrant l'évolution au cours du temps de signaux lors d'un arrêt en montée d'un véhicule automobile par relâchement de la pédale d'accélération ;
- les figures 4A et 4B représentent deux chronogrammes illustrant l'évolution au cours du temps de signaux lors d'un arrêt en montée du véhicule avec un freinage suffisant du conducteur ;
- les figures 5A et 5B représentent deux chronogrammes illustrant l'évolution au cours du temps de signaux lors d'un arrêt en montée du véhicule avec freinage insuffisant du conducteur ;
- la figure 6 représente un diagramme temporel illustrant le calcul de la vitesse du véhicule à partir des périodes d'un capteur de vitesse d'une roue de ce véhicule ;
- la figure 7 représente un diagramme temporel illustrant l'optimisation de l'allure d'une consigne de pression de freinage en fonction du temps appliquée au dispositif de freinage dynamique du véhicule ; et
- la figure 8 est un schéma expliquant la cohérence d'une variation de pente sur laquelle se déplace le véhicule par rapport à la distance parcourue par celui-ci.

L'invention concerne ainsi un système de gestion de l'état et du fonctionnement d'un véhicule automobile se déplaçant notamment sur une pente et devant être placé dans un état d'immobilisation stable.

Le véhicule peut être équipé d'une boîte de vitesses automatique ou d'une boîte de vitesses mécanique à embrayage piloté.

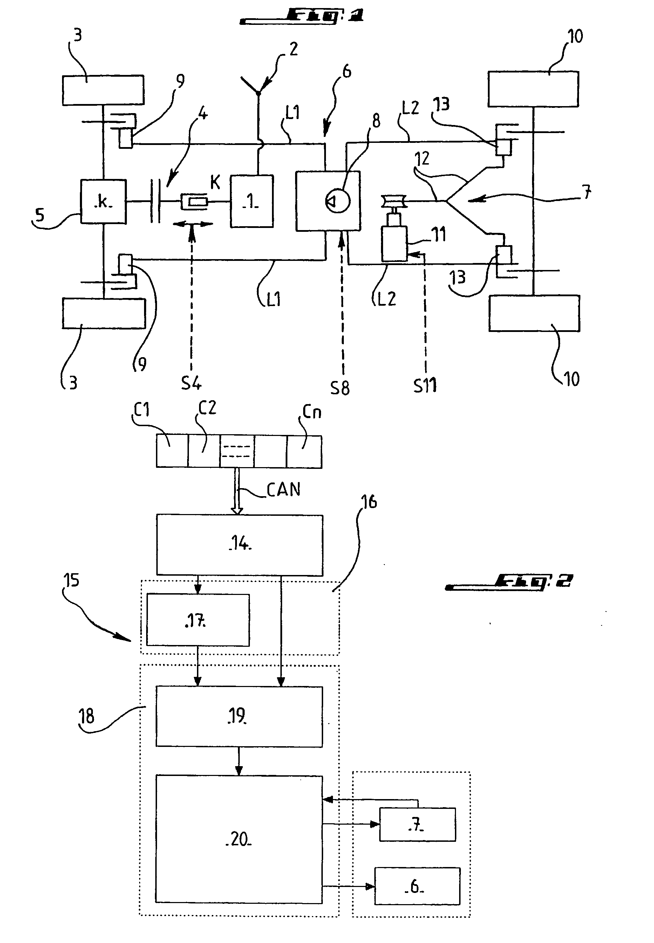

Comme représenté en figure 1, le véhicule est équipé d'un moteur 1 commandé par une pédale d'accélérateur 2.

Le moteur 1 développe un couple moteur K dont l'intégralité ou dont une fraction k peut être transmise aux roues motrices 3 par l'intermédiaire d'un embrayage 4 et d'un système de transmission 5, l'embrayage 4 pouvant être constitué par un embrayage piloté de façon automatique par un signal S4.

Le système de l'invention s'applique à un véhicule équipé d'un dispositif de freinage dynamique 6 et d'un dispositif de freinage statique 7, chacun de ces dispositifs pouvant être commandé par une source d'énergie indépendante de l'énergie musculaire du conducteur.

De préférence, le dispositif de freinage dynamique 6 comprend une pompe électro-hydraulique 8 commandée par un signal S8 et susceptible d'alimenter en liquide de frein sous pression des récepteurs 9 de frein hydraulique associés respectivement aux roues motrices avant 3 et aux roues arrière 10, les liaisons de la pompe 8 aux récepteurs de frein hydraulique 9 et 13 associés aux roues motrices 3 et arrière 10 étant représentées en L1 et L2. Les électrovannes reliant la pompe 8 aux récepteurs 9 de frein hydraulique et formant un modulateur hydraulique connu, ne sont pas représentées pour des raisons de simplicité.

Le dispositif de freinage statique 7 comprend un moto-réducteur électrique 11 commandé par un signal S11 et pouvant entraîner au moins un câble 12 propre à actionner un frein de parking 13 agissant sur les roues arrière 10 du véhicule.

Conformément à l'invention, le système de gestion de l'état et du fonctionnement du véhicule comprend d'une manière générale, comme représenté en figure 2, une pluralité de capteurs C1, C2, C3... Cn qui sont embarqués sur le véhicule et qui permettent de mesurer des variables pouvant intervenir dans la dynamique de fonctionnement du véhicule et d'estimer, par calcul, d'autres variables non directement mesurées.

De manière non limitative, les capteurs utilisés peuvent comprendre un capteur d'accélération ou de décélération longitudinale du véhicule, des capteurs de débattement des roues 3, 10 relativement à la caisse du véhicule et qui peuvent être constitués par ceux destinés à la correction d'assiette de ce véhicule, des capteurs de vitesse de rotation des roues, un capteur par roue pouvant être prévu, et délivrant un signal carré dont la fréquence est proportionnelle à la vitesse de rotation de la roue, un capteur de pression du maître-cylindre en tandem, un inclinomètre de mesure de la pente sur laquelle se déplace le véhicule, un capteur de vitesse de déplacement du véhicule, et autres.

Les différents capteurs C1 à Cn sont reliés par l'intermédiaire d'un bus multiplexé CAN à un circuit 14 d'adaptation des signaux de sortie de ces capteurs pouvant comprendre notamment des moyens de filtrage des signaux.

Le circuit d'adaptation 14 est relié à un dispositif de pilotage 15 auquel sont transmises les différentes informations provenant des différents capteurs C1 à Cn et, le cas échéant, les informations représentatives de l'état de la pédale d'accélération et de la pédale de frein du véhicule, de manière à déterminer à partir de ces informations l'état du véhicule et à calculer des consignes de freinage qui sont transmises au dispositif de freinage dynamique 6 et au dispositif de freinage statique 7 de manière à notamment assurer l'immobilisation du véhicule dès que sa vitesse est nulle, redémarrer le véhicule après un arrêt de celui-ci, provoquer une décélération contrôlée du véhicule et/ou assurer une sûreté de freinage du véhicule à l'arrêt de celui-ci.

Le dispositif de pilotage 15 comprend un module de supervision 16 à bloc électronique 17 dont les fonctions sont notamment d'évaluer à partir des capteurs C1 à Cn la situation dynamique dans laquelle se trouve le véhicule, c'est-à-dire s'il roule sur du plat, en montée ou en descente, en sens de marche avant ou de marche arrière, d'estimer la vitesse du véhicule avec précision à l'aide des capteurs de vitesse de rotation des roues de ce véhicule, notamment dans les basses vitesses, comme on le verra ultérieurement, et/ou d'estimer la pente sur laquelle se déplace le véhicule à la manière qui sera décrite ultérieurement.

Le dispositif de pilotage 15 comprend également un contrôleur 18 dont le rôle est de déterminer l'état du véhicule à partir des informations provenant du bloc 17 ou à partir des informations provenant des capteurs C1 à Cn par l'intermédiaire du circuit d'adaptation 14, et un bloc calculateur 20 calculant des consignes de freinage qui sont transmises au dispositif de freinage piloté ou dynamique 6 et au dispositif de freinage statique 7.

Le dispositif de freinage dynamique 6 permet de générer une pression de freinage roue par roue du véhicule de sorte que le freinage du véhicule peut être appliqué seulement sur les essieux avant ou arrière ou simultanément sur ces deux essieux. Le capteur d'accélération longitudinale peut être intégré directement dans le bloc du dispositif de freinage dynamique 6 et dans lequel sont également situés un capteur d'accélération latéral et un capteur de mouvement en lacet du véhicule.

L'invention s'intéresse ici plus particulièrement à la gestion du fonctionnement d'un véhicule se déplaçant en pente.

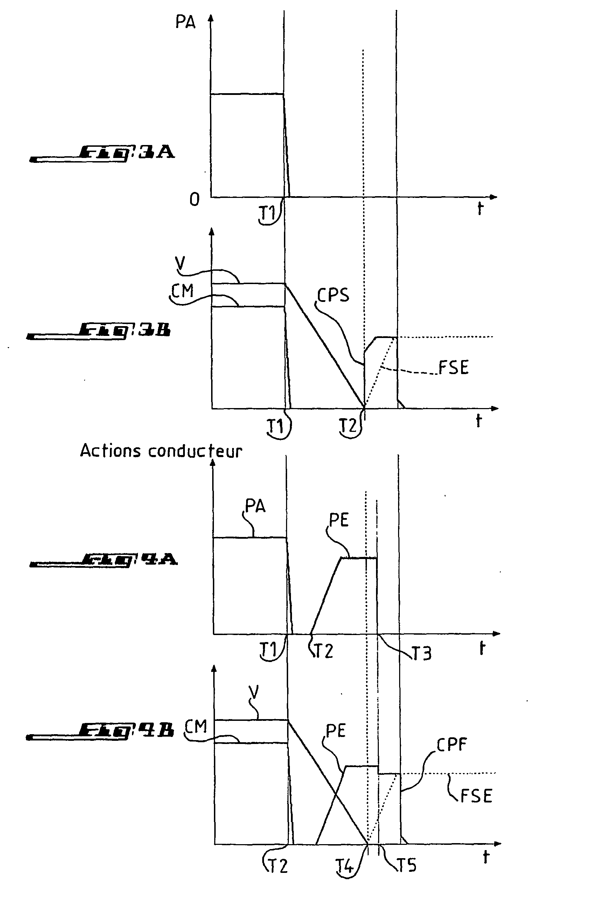

D'une manière générale, lorsque le véhicule se déplace sur une pente relativement forte, par exemple d'au moins 20 %, le dispositif de pilotage 15 est programmé de manière à immobiliser le véhicule et le maintenir à l'arrêt dès que sa vitesse est nulle en calculant des consignes de freinage permettant d'actionner simultanément le dispositif de freinage dynamique 6 et le dispositif de freinage statique 7. Cette situation est reflétée aux figures 3A et 3B où la figure 3A montre l'actionnement de la pédale d'accélération PA en fonction du temps, le relâchement de cette pédale intervenant au temps T1 auquel le couple moteur CM diminue de façon correspondante comme indiqué par courbe CM de la figure 3B. Dès le relâchement de la pédale d'accélération 2, la vitesse du véhicule symbolisée par la courbe V diminue pour devenir nulle au temps T2, le dispositif de pilotage 15 pilote le dispositif de freinage dynamique 6 en lui envoyant une consigne de pression de freinage définie par la courbe CPS en figure 3B et, en même temps, pilote le dispositif de freinage statique 7 suivant la consigne de freinage représentée par la courbe FSE en pointillés sur la figure 3B pour de la sorte immobiliser, dès le temps T2, le véhicule sur une forte pente afin d'obtenir un effort de freinage puissant permettant le maintien du véhicule.

Dans le cas d'une pente relativement faible, par exemple inférieure à 3%, le dispositif de pilotage 15 peut également être programmé pour immobiliser le véhicule dès que sa vitesse est nulle en freinant ce dernier par actionnement uniquement du dispositif de freinage statique 7, la consigne de freinage transmise par le contrôleur 20 au dispositif 7 ayant l'allure de la courbe FSE de la figure 3B.

Lors d'une demande d'accélération du véhicule par appui par le conducteur sur la pédale d'accélération 2 lorsque le véhicule est immobilisé sur une forte pente, le dispositif de pilotage 15 désactive le dispositif de freinage statique 7 et commande une opération de libération du véhicule en désactivant progressivement le dispositif de freinage dynamique 6 pour permettre au véhicule de repartir.

Avantageusement, la consigne de pression de freinage CPF transmise par le contrôleur 20 du dispositif de pilotage 15 au dispositif de freinage dynamique 6 est optimisée de façon à tenir compte d'une part de la pente sur laquelle se déplace le véhicule afin d'appliquer la pression de freinage juste nécessaire majorée d'un facteur multiplicatif de sécurité et d'autre part de l'efficacité globale du freinage afin de prendre en compte les variations de masse du véhicule et les variations du coefficient de frottement des plaquettes de frein dépendant de la température des freins, de l'usure des plaquettes de frein, du degré d'hygrométrie, etc...

L'efficacité globale du freinage du véhicule est déterminée tout simplement par la décélération du véhicule pour une pression de freinage donnée ; elle est donc déterminée lors des freinages du conducteur de façon totalement transparente et, par conséquent, transmise au dispositif de pilotage 15. Cette efficacité globale du freinage peut être réinitialisée à une valeur volontairement sévère correspondant à des situations critiques de freinage liées à un faible coefficient de frottement de plaquettes dû, par exemple, à un degré d'usure important de celles-ci ou à une température anormalement élevée des freins et une telle réinitialisation peut être effectuée lors de l'évolution de la masse du véhicule se traduisant, par exemple, par la présence d'une remorque attelée à l'arrière du véhicule ou d'une charge fixée au toit du véhicule et détectée lors de la mise route du moteur du véhicule.

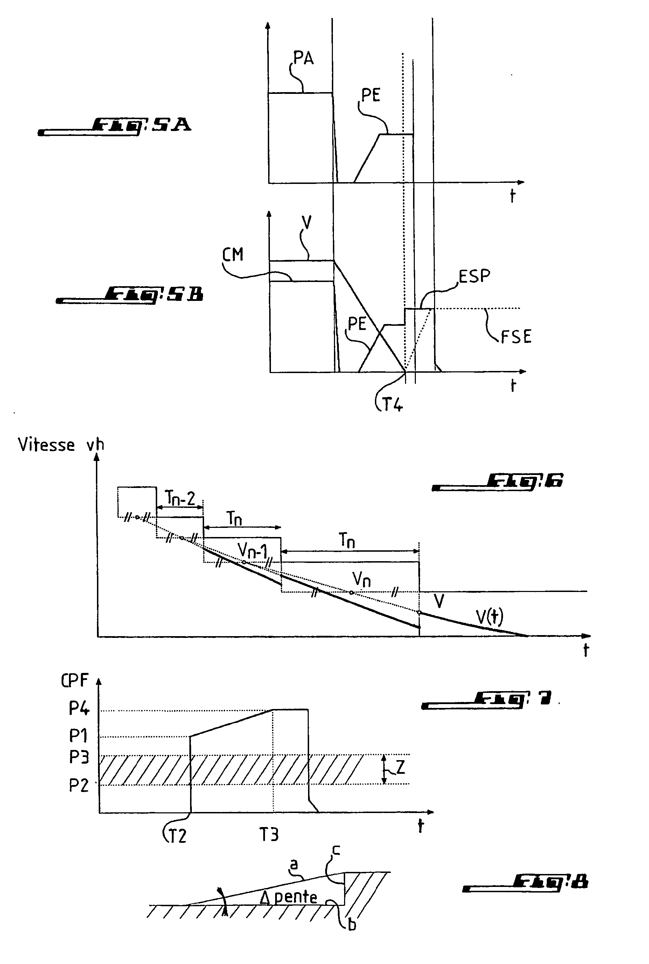

La figure 7 représente l'allure optimisée d'une consigne de pression de freinage CPF appliquée par le dispositif de pilotage 15 au dispositif de freinage dynamique 6 en fonction de la pente sur laquelle se déplace le véhicule et de l'efficacité globale de freinage. Cette courbe montre qu'au temps T2, la pression monte rapidement à une valeur P1 située au-dessus d'une zone Z dans laquelle peuvent se produire des bruits de freinage située entre des pressions de freinage P2 et P3 où P3 correspond à la pression de freinage juste nécessaire pour maintenir le véhicule à l'arrêt et P2 correspond à la moitié de la pression P3. La courbe optimisée évolue ensuite plus lentement jusqu'à une valeur cible de pression P4 de freinage tenant compte de la pente et de l'efficacité globale du freinage et pouvant être calculée de manière à correspondre, par exemple, au double de la pression P3. La figure 7 montre que, par exemple après un relayage du dispositif de pression statique 6 pour maintenir à l'arrêt le véhicule, la pression P4 chute rapidement en dessous de la zone de bruits Z puis diminue plus lentement jusqu'à une valeur de pression nulle afin d'adoucir la variation d'assiette du véhicule due à la transition du freinage des quatre roues de véhicule par le dispositif de freinage dynamique vers les deux roues arrière du véhicule par le dispositif de freinage statique 6.

On notera également que la pression de freinage conforme à la courbe de la figure 7 est appliquée par le dispositif de freinage dynamique 6 sur les quatre roues du véhicule, même si le dispositif de freinage statique 6 prend ensuite le relais pour actionner les freins arrière du véhicule, ce qui permet de limiter fortement les mouvements de la caisse du véhicule lors de la phase d'arrêt de celui-ci.

Les figures 4A et 4B représentent deux chronogrammes lors d'un arrêt d'un véhicule se déplaçant sur une pente ascendante avec un freinage suffisant exercé par le conducteur sur la pédale de frein. La figure 4A reflète ainsi la situation selon laquelle le conducteur a relâché au temps T1 la pédale d'accélération 2 (courbe PA), puis au temps T2 a exercé jusqu'au temps T3 une pression de freinage sur la pédale de frein du véhicule (courbe PE). La courbe CM de la figure 4B est relative au couple moteur évoluant conformément au relâchement de la pédale d'accélération 2 et la courbe V concerne la vitesse de déplacement du véhicule qui devient nulle au temps T4 avant que le conducteur ait relâché la pédale de frein au temps T5 auquel le dispositif de freinage dynamique 7 a pris le relais pour maintenir à l'arrêt le véhicule conformément à la courbe CPF dont la chute de pression est conforme à celle de la figure 7 une fois que le dispositif de freinage statique 7 aura pris le relais pour maintenir à l'arrêt le véhicule comme indiqué par la courbe FSE.

Les figures 5A et 5B représentent deux chronogrammes de l'arrêt du véhicule se déplaçant sur une pente ascendante avec un freinage insuffisant du conducteur exercé sur la pédale de frein du véhicule.

La figure 5A est identique à la figure 4A à la différence que la pression de freinage PE exercée par le conducteur sur la pédale de frein est inférieure à celle de la figure 4A. La figure 5B montre que lorsque la vitesse du déplacement du véhicule est nulle au temps T4 alors que le conducteur exerce la pression de freinage insuffisante, le dispositif de pilotage 15 transmet au dispositif de freinage dynamique 6 la consigne de freinage CPF dont la pression, déterminée suivant la pente et l'efficacité globale de freinage, est supérieure à la pression de freinage exercée par le conducteur de façon à maintenir à l'arrêt le véhicule sans qu'il puisse reculer. Ensuite, les allures des courbes CPF et FSE sont identiques à celles décrites en référence à la figure 4B.

Dans des conditions de charge du véhicule extrêmement élevées, le conducteur du véhicule peut en informer le dispositif de pilotage 15 afin que ce dernier puisse appliquer au véhicule une pression de freinage plus importante. Par exemple, le conducteur peut exercer une pression sur le bouton de commande du dispositif de freinage statique 7 pendant une durée déterminée, par exemple d'au moins trois secondes. Le dispositif de pilotage peut prendre en compte cette information du conducteur pour commander l'allumage d'un témoin lumineux sur la planche de bord du véhicule et, en tout cas, pour commander les dispositifs de freinage dynamique et statique afin qu'ils appliquent la pression de freinage tenant compte de la charge importante du véhicule.

Le dispositif de pilotage 15 peut connaître l'effort de freinage exercé par le ou les câbles 12 du dispositif de freinage statique 7 pour ensuite adapter cet effort suivant, par exemple, la pente sur laquelle se déplace le véhicule. Cet effort peut être mesuré de façon classique par un capteur de tension du câble, par exemple du type à potentiomètre, dont les variations de résistance correspondent aux variations de tension dans le câble, du type à effet Hall et aimant, ou du type à interrupteur ayant plusieurs positions correspondant à différents niveaux de tension de serrage du câble 12. De préférence, selon l'invention, l'effort de freinage exercé dans le ou les câbles 12 du dispositif de freinage statique 7 est estimé à partir de l'intensité du courant de commande du moteur électrique de ce dispositif, solution économique puisqu'elle n'utilise pas de capteur. Ainsi, le dispositif de pilotage 15 peut calculer l'effort de serrage dans le ou les câbles 12 en déterminant le couple en sortie du moteur électrique à partir de l'intensité du courant électrique du moteur et du rendement, connu, du réducteur associé au moteur électrique.

Ce dispositif de pilotage 15 peut également être programmé de manière à assurer un mode de freinage de secours lorsque le dispositif de freinage dynamique est hors service. A cet effet, le dispositif de pilotage 15 actionne le dispositif de freinage statique 7 lorsque le conducteur actionne le bouton de commande de ce dispositif et qu'il appuie simultanément sur la pédale de frein du véhicule, de sorte que la pression hydraulique de freinage est établie par le conducteur à la place du dispositif de freinage dynamique 6.

Le dispositif de pilotage 15 peut être programmé pour élaborer une stratégie dite de point à mort ou neutre. Plus précisément, lorsque le véhicule s'arrête alors que le levier sélecteur de vitesse est au point à mort ou en position neutre suivant le type de boîte de vitesses, aucun ordre de freinage par le dispositif de pilotage ne sera effectué. Par contre, si le levier sélecteur est positionné à sa position de point à mort ou à sa position neutre alors que le véhicule était déjà maintenu à l'arrêt par le dispositif de freinage dynamique et/ou le dispositif de freinage statique, ce maintien est conservé.

Le dispositif de pilotage 15 est également adapté pour déterminer la pente sur laquelle se déplace le véhicule en calculant la différence entre la valeur de décélération longitudinale du véhicule fournie par le capteur de décélération longitudinale et la valeur de décélération longitudinale calculée par le dispositif 15 à partir des capteurs de vitesse de rotation des roues du véhicule, cette valeur de décélération longitudinale calculée ne dépendant pas de la pente, afin d'en déduire une valeur de décalage de décélération longitudinale $\gamma_{longipente}$ :

$$\gamma_{longipente} = \gamma_{longicapteur} - \gamma_{longiroues}.$$

A partir de cette valeur de décalage de décélération longitudinale, le dispositif de pilotage 15 peut alors calculer la pente suivant la formule :

$$pente[\%] = 100x \tan\left\{arcsin\left(\frac{\gamma_{longipente}}{g}\right)\right\}$$

Dans la mesure où le capteur d'accélération longitudinale présent sur le véhicule est sensible aux variations d'assiette de ce véhicule, il est souhaitable lorsque des capteurs de débattement des roues par rapport à la caisse du véhicule sont présents, de corriger le signal fourni par le capteur d'accélération longitudinale en fonction de l'assiette du véhicule et suivant la formule :

$$\gamma_{longi\ cap\ corr} = \gamma_{longi\ capteur} - \sin\left(arctan\left(\frac{Zav - Zar}{a}\right)\right)$$

Où $Z_{av}$ : débattement des roues avant par rapport à la caisse ;
$Z_{ar}$ : débattement des roues arrière par rapport à la caisse ;
$\underline{a}$ : empattement du véhicule.

En outre, le dispositif de pilotage 15 permet d'analyser l'évolution de la pente calculée pour vérifier sa cohérence avec la distance parcourue par le véhicule afin de ne pas prendre en compte pour l'immobilisation du véhicule une faible distance parcourue par celui-ci pour un écart des pente calculé, ce qui pourrait être le cas, par exemple, lorsque le véhicule monte sur un trottoir comme représenté en figure 8. A cet effet, dans le cas du véhicule montant sur le trottoir, le dispositif de pilotage 15 calcule un écart de pente suivant la formule :

$$\Delta_{pente} = Arc\cos\left(\frac{b - \Delta b}{a}\right) - Arc\cos\left(\frac{b}{a}\right)$$

où $\underline{a}$ est l'empattement du véhicule, le rayon des roues étant négligé, et
b est la distance parcourue par le véhicule.

Le dispositif de pilotage 15, lors de la décélération du véhicule, calcule une valeur de décélération longitudinale $\gamma_{longiroues}$ à partir de chacun des capteurs de vitesse des roues du véhicule suivant la formule :

$$\gamma longiroues = 2 \, \frac{2\pi R}{N} \, \text{x} \, \frac{\dfrac{1}{Tn} - \dfrac{1}{Tn-1}}{Tn + Tn - 1}$$

où R est le rayon de roulement de la roue ;

N est le nombre de tops par tour du capteur de vitesse ; et

$T_n$, $T_{n-1}$, ... sont respectivement les périodes présente et passée définies à chaque front montant de la période du signal carré fourni par le capteur de vitesse et qui est inversement proportionnelle à la vitesse de rotation de la roue.

Ensuite, le dispositif de pilotage 15 calcule une valeur de décélération longitudinale moyenne pour les quatre roues.

Enfin, le dispositif de pilotage 15 est apte à calculer la vitesse de déplacement du véhicule comme schématisé en figure 6. En fait, il s'agit de déterminer la vitesse de rotation d'une roue à partir de la période du signal issue du capteur de vitesse des roues du véhicule et, dans les très basses vitesses, inférieures à O,5 m/s, la résolution du capteur est trop faible pour que l'on puisse se contenter de mettre à jour la vitesse uniquement lors de chaque front montant du signal périodique. On utilise alors la décélération longitudinale $\gamma_{longiroues}$ calculée sur les deux créneaux précédents pour faire évoluer la vitesse de façon continue entre ces deux créneaux.

Le calcul de la vitesse du véhicule s'effectue alors suivant la formule :

$$V(t) = \frac{2\pi R}{NTn} \, \text{x} \, \gamma longiroues \, \frac{Tn + t}{2}$$

où t représente le temps écoulé depuis le dernier front montant de signal.

La vitesse retenue du véhicule par le dispositif de pilotage 15 est alors la moyenne des quatre valeurs calculées de vitesse du véhicule par filtrage individuel par un filtre passe-bas à fréquence de coupure d'environ 10 Hz.

Le dispositif de pilotage 15 peut être constitué de plusieurs calculateurs électroniques dédiés aux différentes fonctions définies dans la description qui précède. Il peut s'agir par exemple d'une architecture de pilotage du type à calculateur maître pilotant et coordonnant les actions de chacun des calculateurs esclaves contenant les algorithmes de commande des dispositifs de freinage dynamique et statique.

Le système de l'invention ne nécessite aucun apprentissage de la part du conducteur. En outre, il assure un arrêt sans recul en côte quelle que soit la pression de freinage du conducteur et la pente.

**Revendications**

1. Système de gestion de l'état et du fonctionnement d'un véhicule automobile doté d'un dispositif de freinage dynamique (6) et d'un dispositif de freinage statique (7), comprenant un certain nombre de capteurs (C1, ...Cn) embarqués sur le véhicule, tels qu'un capteur de décélération longitudinale du véhicule, au moins un capteur de vitesse de rotation de l'une des roues du véhicule, un capteur de débattement des roues du véhicule relativement à la caisse de celui-ci, et un capteur de pression du maître-cylindre, un dispositif de pilotage (15) recevant des informations des différents capteurs et apte à déterminer à partir de ces informations et, le cas échéant, de celles représentatives des états des pédales de frein et d'accélération (2) du véhicule, l'état du véhicule et à calculer des consignes de freinage transmises aux dispositifs de freinage dynamique (6) et statique (7) permettant notamment de maintenir immobilisé le véhicule dés que sa vitesse est nulle, de redémarrer le véhicule après un arrêt de celui-ci, de provoquer une décélération contrôlée du véhicule ou d'assurer une sûreté de freinage du véhicule à l'arrêt de celui-ci ledit système étant, **caractérisé en ce que** le dispositif de pilotage (15) est apte à immobiliser le véhicule dès que sa vitesse est nulle en freinant ce dernier par actionnement simultané de son dispositif de freinage dynamique (6) et de son dispositif de freinage statique (7) lorsque le véhicule se trouve sur une pente relativement forte, par exemple d'au moins 20 %.

2. Système selon la revendication 1 **caractérisé en ce que** le dispositif de pilotage (15) est apte à immobiliser le véhicule dès que sa vitesse est nulle en freinant ce dernier par actionnement de son dispositif de freinage statique lorsque le véhicule se trouve sur une pente relativement faible, par exemple inférieure à 3 %.

**3.** Système selon l'une des revendications précédentes, **caractérisé en ce que** le dispositif de pilotage (15) permet de déterminer la pente sur laquelle se déplace le véhicule en calculant la différence entre la valeur de décélération longitudinale du véhicule fournie par le capteur de décélération longitudinale et la valeur de décélération longitudinale calculée à partir du capteur de vitesse de rotation d'une roue du véhicule pour déterminer une valeur de décalage de décélération longitudinale $\gamma_{longipente}$ et en calculant la pente suivant la formule :

$$pente[\%] = 100x \tan\left\{arcsin\left(\frac{\gamma longipente}{g}\right)\right\}$$

**4.** Système selon la revendication 3, **caractérisé en ce que** le dispositif de pilotage (15) permet d'analyser l'évolution de la pente calculée pour vérifier sa cohérence avec la distance parcourue par le véhicule afin de ne pas prendre en compte pour l'immobilisation du véhicule une faible distance parcourue par celui-ci pour un écart de pente calculé, en utilisant la formule suivante :

$$\Delta_{pente} = Arc\cos\left(\frac{b - \Delta b}{a}\right) - Arc\cos\left(\frac{b}{a}\right)$$

où a est l'empattement du véhicule et
b est la distance parcourue par le véhicule.

**5.** Système selon la revendication 3 ou 4, **caractérisé en ce que** le dispositif de pilotage (15) calcule une correction de la valeur de décélération longitudinale fournie par la capteur correspondant à partir des capteurs de débattement des roues avant et arrière relativement à la caisse du véhicule suivant la formule :

$$\gamma_{longi\ cap\ corr} = \gamma_{longi\ capteur} - sin\left(arctan\left(\frac{Z_{av} - Z_{av}}{a}\right)\right)$$

où Zav est le débattement des roues avant,
Zar est le débattement des roues arrière, et
a est l'empattement du véhicule.

**6.** Système selon l'une des revendications précédentes, **caractérisé en ce que** le dispositif de pilotage (15) calcule une consigne de pression de freinage optimisée appliquée au dispositif de freinage dynamique en fonction de la pente sur laquelle se déplace le véhicule et d'une estimation de l'efficacité du freinage globale du véhicule déterminée par la décélération longitudinale du véhicule pour une pression de freinage donnée résultant de l'enfoncement de la pédale de frein par le conducteur du véhicule lors des opérations de freinage de ce dernier.

**7.** Système selon la revendication 6, **caractérisé en ce que** le dispositif de pilotage (15) optimise la consigne de pression de freinage à une valeur juste nécessaire pour maintenir le véhicule à l'arrêt majorée d'un facteur multiplicatif de sécurité de façon que la pression de freinage appliquée au dispositif de freinage dynamique (6) soit au-dessus de la zone (Z) de bruits de freinage.

**8.** Système selon la revendication 7, **caractérisé en ce que** le dispositif de freinage dynamique (6) est activé par le dispositif de pilotage (15) de manière à appliquer la consigne de freinage aux quatre roues du véhicule et lorsque le dispositif de freinage dynamique (6) est désactivé, la pression de freinage chute brutalement en-dessous de la zone de bruits, puis diminue plus lentement jusqu'à une valeur nulle.

**9.** Système selon l'une des revendications précédentes, **caractérisé en ce que**, lors d'une décélération du véhicule, le dispositif de pilotage (15) calcule une valeur de décélération à partir de chacun des capteurs de vitesse des roues du véhicule suivant la formule :

$$\gamma\ longiroues\ =\ 2\ \frac{2\pi R}{N}\ x\ \frac{\dfrac{1}{Tn}\ -\ \dfrac{1}{Tn-1}}{Tn\ +\ Tn-1}\ -$$

où R :rayon de roulement de la roue
N :nombre de tops par tour du capteur
Tn,Tn-1 :périodes présente et passée du signal carré fourni par la capteur inversement proportionnelles à la vitesse de rotation de la roue,
le dispositif de pilotage effectuant une moyenne des quatre valeurs calculées de décélérations longitudinales pour les quatre roues et calculant la vitesse du véhicule à partir de chaque valeur calculée de décélération suivant la formule :

$$v(t)\ =\ \frac{2\pi R}{NTn}\ x\ \gamma longiroues\ \frac{Tn\ +\ t}{2}$$

où t:temps écoulé depuis le dernier front de montée du signal carré du capteur,
et le dispositif de pilotage effectue une moyenne des quatre valeurs calculées de vitesse du véhicule.

**10.** Système selon l'une des revendications précédentes, **caractérisé en ce que** le dispositif de freinage statique (7) comprend un moto-réducteur électrique (11) entraînant au moins un câble (12) d'actionnement d'un frein de parking agissant sur les roues arrière du véhicule et **en ce que** le dispositif de pilotage (15) calcule l'effort de serrage dans le câble (12) en déterminant le couple en sortie du moteur électrique à partir de l'intensité du courant électrique du moteur et du rendement du réducteur de ce dernier.

**11.** Système selon l'une des revendications précédentes, **caractérisé en ce que** le dispositif de pilotage (15) actionne le dispositif de freinage statique (7) lorsque le conducteur actionne le bouton de commande de ce dernier et que le conducteur appuie simultanément sur la pédale de frein pour assurer un mode de secours lorsque le dispositif de freinage dynamique (6) est hors-service.

**12.** Système selon l'une des revendications précédentes, **caractérisé en ce que** le dispositif de pilotage (15) maintient activé le dispositif de freinage dynamique (6) et/ou statique (7) si le conducteur amène le levier sélecteur de la boîte de vitesses en position de point mort ou neutre à l'arrêt du véhicule et le dispositif de pilotage (15) n'active aucun des dispositifs de freinage dynamique (6) et statique (7) si le véhicule s'arrête en position de point mort ou neutre de ce levier.

**13.** Système selon l'une des revendications précédentes, **caractérisé en ce que** le dispositif de pilotage (15) applique au dispositif de freinage dynamique (6) et/ou au dispositif de freinage statique (7) une consigne de pression de freinage plus importante en cas de surcharge du véhicule signalée au dispositif de pilotage (15) par une action manuelle du conducteur, telle qu'une pression pendant une durée déterminée sur un bouton de commande du dispositif de freinage statique (7).

**Claims**

**1.** System for managing the state and operation of a motor vehicle provided with a dynamic braking device (6) and with a static braking device (7), comprising a certain number of sensors (C1, ... Cn) on board the vehicle, such as a sensor that senses the longitudinal deceleration of the vehicle, at least one sensor that senses the rotational speed of one of the wheels of the vehicle, a sensor that senses the travel of the wheels of the vehicle relative to the body shell thereof, and a sensor that senses the pressure in the master cylinder, a control device (15) receiving information from the various sensors and capable of determining, from this information and, if appropriate, from information representative of the states of the brake and accelerator (2) pedals of the vehicle, the state of the vehicle and of calculating braking instructions transmitted to the dynamic (6) and static (7) braking device with a view in particular to keeping the vehicle immobilized as soon as its speed reaches zero, to restarting the vehicle after it has stopped, to bringing about a controlled deceleration of the vehicle or to ensuring dependable braking of the vehicle when the latter is stationary, the said system being **characterized in that** the control device (15) is able to immobilize the vehicle as soon as its speed reaches zero by braking the vehicle through simultaneous actuation of the dynamic braking device (6) and static braking device (7) thereof when the vehicle is on a relatively steep gradient of, for example, at least 20%.

2. System according to Claim 1, **characterized in that** the control device (15) is able to immobilize the vehicle as soon as its speed reaches zero by braking the latter through actuation of the static braking device thereof when the vehicle is on a relatively shallow gradient, for example of less than 3%.

3. System according to one of the preceding claims, **characterized in that** the control device (15) makes it possible to determine the gradient on which the vehicle is travelling by calculating the difference between the value of the longitudinal deceleration of the vehicle as provided by the longitudinal deceleration sensor and the value of longitudinal deceleration as calculated from the sensor that senses the rotational speed of one wheel of the vehicle in order to determine a longitudinal deceleration offset $\gamma_{\text{longigrad}}$ and by calculating the gradient using the formula:

$$grad[\%] \ = \ 100 \ \times \ \tan\left\{\arcsin\left(\frac{\gamma_{\text{longigrad}}}{g}\right)\right\}.$$

4. System according to Claim 3, **characterized in that** the control device (15) is able to analyse the change in calculated gradient in order to check its consistency with the distance covered by the vehicle in order when immobilizing the vehicle not to take into consideration a short distance covered by the vehicle for a calculated difference in gradient, using the following formula:

$$\Delta_{\text{grad}} \ = \ \text{Arc}\cos\left(\frac{b - \Delta b}{a}\right) - \text{Arc}\cos\left(\frac{b}{a}\right)$$

where $\underline{a}$ is the wheelbase of the vehicle, and
$\underline{b}$ is the distance covered by the vehicle.

5. System according to Claim 3 or 4, **characterized in that** the control device (15) calculates a correction for the value of longitudinal deceleration as supplied by the corresponding sensor on the basis of the sensors that sense the travel of the front and rear wheels relative to the body shell of the vehicle, using the formula:

$$\gamma_{longi\ sen\ corr} = \gamma_{longi\ sensor} \ - \ \sin\left(\arctan\left(\frac{Z_f - Z_r}{a}\right)\right)$$

where

$Z_f$ is the travel of the front wheels,
$Z_r$ is the travel of the rear wheels, and
$\underline{a}$ is the wheelbase of the vehicle.

6. System according to one of the preceding claims, **characterized in that** the control device (15) calculates an optimized braking pressure instruction applied to the dynamic braking device as a function of the gradient on which the vehicle is travelling and of an estimate of the efficiency of the overall braking of the vehicle as determined by the longitudinal deceleration of the vehicle for a given braking pressure resulting from the depressing of the brake pedal by the driver of the vehicle during vehicle braking operations.

**7.** System according to Claim 6, **characterized in that** the control device (15) optimizes the braking pressure instruction to a value just enough to keep the vehicle stationary increased by a multiplicative factor of safety so that the braking pressure applied to the dynamic braking device (6) is above the brake noise zone (Z).

**8.** System according to Claim 7, **characterized in that** the dynamic braking device (6) is activated by the control device (15) in such a way as to apply the braking instruction to the four wheels of the vehicle and when the dynamic braking device (6) is deactivated, the braking pressure drops sharply below the noise zone then decreases more slowly down to a zero value.

**9.** System according to one of the preceding claims, **characterized in that**, as the vehicle decelerates, the control device (15) calculates the deceleration value from each of the sensors that sense the speed of the wheels of the vehicle, using the formula:

$$\gamma_{longiwheels} = 2 \frac{2\pi R}{N} \times \frac{\dfrac{1}{Tn} - \dfrac{1}{Tn - 1}}{Tn + Tn - 1}$$

where

R is the rolling radius of the wheel
N is the number of pulses per revolution of the sensor
Tn, Tn - 1 are the current and previous periods of the square signal provided by the sensor which is in inverse proportion to the rotational speed of the wheel,

the control device calculating a mean of the four calculated values of longitudinal deceleration for the four wheels and calculating the vehicle speed from each calculated deceleration value using the formula:

$$V(t) = \frac{2\pi R}{NTn} \times \gamma_{longiwheels} \frac{Tn + t}{2}$$

where t is the time that has elapsed since the last rising edge of the square signal from the sensor,
and the control device calculates a mean of the four calculated vehicle speed values.

**10.** System according to one of the preceding claims, **characterized in that** the static braking device (7) comprises an electric geared motor unit (11) driving at least one cable (12) that operates a parking brake acting on the rear wheels of the vehicle and **in that** the control device (15) calculates the brake-application force in the cable (12) by determining the torque at the output from the electric motor using the strength of the electric current drawn by the motor and the efficiency of the geared motor unit thereof.

**11.** System according to one of the preceding claims, **characterized in that** the control device (15) actuates the static braking device (7) when the driver actuates the control button thereof and the driver simultaneously depresses the brake pedal in order to provide a backup mode when the dynamic braking device (6) is out of operation.

**12.** System according to one of the preceding claims, **characterized in that** the control device (15) keeps the dynamic (6) and/or static (7) braking device activated if the driver brings the gearbox selector lever into the disengaged or neutral position when the vehicle is stationary and the control device (15) does not activate either the dynamic (6) or the static (7) braking device if the vehicle stops with this lever in the disengaged or neutral position.

**13.** System according to one of the preceding claims, **characterized in that** the control device (15) applies a higher braking pressure instruction to the dynamic braking device (6) and/or to the static braking device (7) if the vehicle is overloaded as signalled to the control device (15) by a manual action on the part of the driver, such as by pressing the control button for the static braking device (7) for a determined length of time.

**Patentansprüche**

**1.** System zur Verwaltung des Zustands und des Betriebs eines mit einer dynamischen Bremsvorrichtung (6) und mit einer statischen Bremsvorrichtung (7) ausgestatteten Kraftfahrzeugs, das eine bestimmte Anzahl von Sensoren (C1, ... Cn), wie einen Längsverzögerungssensor des Fahrzeugs, mindestens einen Drehgeschwindigkeitssensor eines der Räder des Fahrzeugs, einen Einfederungssensor der Räder des Fahrzeugs bezüglich von dessen Aufbau, und einen Drucksensor des Hauptbremszylinders an Bord des Fahrzeugs enthält, wobei eine Steuervorrichtung (15) Informationen von den verschiedenen Sensoren empfängt und ausgehend von diesen Informationen und ggf. denjenigen, die für die Zustände der Brems- und Gaspedale (2) des Fahrzeugs repräsentativ sind, den Zustand des Fahrzeugs bestimmen und Bremsanweisungen berechnen kann, die an die dynamische (6) und an die statische Bremsvorrichtung (7) übertragen werden, was es insbesondere ermöglicht, das Fahrzeug immobilisiert zu halten, sobald seine Geschwindigkeit Null ist, das Fahrzeug nach einem Anhalten wieder zu starten, eine kontrollierte Verzögerung des Fahrzeugs zu bewirken oder eine Bremssicherheit des Fahrzeugs zu gewährleisten, wenn es angehalten ist, wobei das System **dadurch gekennzeichnet ist, dass** die Steuervorrichtung (15) das Fahrzeug immobilisieren kann, sobald seine Geschwindigkeit Null ist, indem es durch gleichzeitige Betätigung seiner dynamischen Bremsvorrichtung (6) und seiner statischen Bremsvorrichtung (7) gebremst wird, wenn das Fahrzeug sich auf einem relativ starken Gefälle von zum Beispiel mindestens 20 % befindet.

**2.** System nach Anspruch 1, **dadurch gekennzeichnet, dass** die Steuervorrichtung (15) das Fahrzeug immobilisieren kann, sobald seine Geschwindigkeit Null ist, indem sie es durch Betätigung seiner statischen Bremsvorrichtung bremst, wenn das Fahrzeug sich auf einem relativ geringen Gefälle von zum Beispiel weniger als 3 % befindet.

**3.** System nach einem der vorhergehenden Ansprüche, **dadurch gekennzeichnet, dass** die Steuervorrichtung (15) es ermöglicht, das Gefälle zu bestimmen, auf dem sich das Fahrzeug bewegt, indem die Differenz zwischen dem vom Längsverzögerungssensor gelieferten Längsverzögerungswert des Fahrzeugs und dem ausgehend vom Drehgeschwindigkeitssensor eines Rads des Fahrzeugs berechneten Längsverzögerungswert berechnet wird, um einen Längsverzögerungs-Versatzwert $\gamma_{\text{longipente}}$ zu bestimmen, und indem das Gefälle gemäß folgender Formel berechnet wird:

$$\texttt{Gefälle[\%]} = 100 \text{ x } \tan\left\{\arcsin\left(\frac{\gamma_{\text{longipente}}}{g}\right)\right\}$$

**4.** System nach Anspruch 3, **dadurch gekennzeichnet, dass** die Steuervorrichtung (15) es ermöglicht, die Entwicklung des berechneten Gefälles zu analysieren, um ihre Kohärenz mit der vom Fahrzeug zurückgelegten Strecke zu überprüfen, um für die Immobilisierung des Fahrzeugs keine von diesem zurückgelegte kurze Strecke für eine berechnete Gefälleabweichung zu berücksichtigen, indem die folgende Formel verwendet wird:

$$\Delta_{\texttt{Gefälle}} = \text{Arc } \cos\left(\frac{b - \Delta b}{a}\right) - \text{Arc } \cos\left(\frac{b}{a}\right)$$

wobei a̲ der Radstand des Fahrzeugs und
b̲ die vom Fahrzeug zurückgelegte Strecke ist.

**5.** System nach Anspruch 3 oder 4, **dadurch gekennzeichnet, dass** die Steuervorrichtung (15) eine Korrektur des vom entsprechenden Sensor gelieferten Längsverzögerungswerts ausgehend von den Sensoren der Einfederung der Vorder- und Hinterräder bezüglich des Aufbaus des Fahrzeugs gemäß der folgenden Formel berechnet:

$$\gamma_{\text{longi cap corr}} = \gamma_{\text{longi Sensor}} - \sin\left(\arctan\left(\frac{\text{Zav} - \text{Zav}}{a}\right)\right)$$

wobei Zav die Einfederung der Vorderräder ist,
Zar die Einfederung der Hinterräder ist, und
<u>a</u> der Radstand des Fahrzeugs ist.

6. System nach einem der vorhergehenden Ansprüche, **dadurch gekennzeichnet, dass** die Steuervorrichtung (15) eine optimierte Bremsdruckanweisung berechnet, die an die dynamische Bremsvorrichtung angewendet wird, in Abhängigkeit von dem Gefälle, auf dem sich das Fahrzeug bewegt, und von einer Schätzung der Wirksamkeit des globalen Bremsens des Fahrzeugs, die durch die Längsverzögerung des Fahrzeugs für einen gegebenen Bremsdruck bestimmt wird, der aus dem Eindrücken des Bremspedals durch den Fahrer des Fahrzeugs bei Bremsvorgängen dieses letzteren resultiert.

7. System nach Anspruch 6, **dadurch gekennzeichnet, dass** die Steuervorrichtung (15) die Bremsdruckanweisung auf einen Wert optimiert, der gerade notwendig ist, um das Fahrzeug angehalten zu halten, erhöht um einen multiplikativen Sicherheitsfaktor, damit der an die dynamische Bremsvorrichtung (6) angewendete Bremsdruck sich oberhalb der Zone (Z) von Bremsgeräuschen befindet.

8. System nach Anspruch 7, **dadurch gekennzeichnet, dass** die dynamische Bremsvorrichtung (6) von der Steuervorrichtung (15) so aktiviert wird, dass die Bremsanweisung an die vier Räder des Fahrzeugs angewendet wird, und wenn die dynamische Bremsvorrichtung (6) deaktiviert wird, der Bremsdruck abrupt unter die Geräuschzone abfällt und dann langsamer bis auf einen Wert Null abnimmt.

9. System nach einem der vorhergehenden Ansprüche, **dadurch gekennzeichnet, dass** bei einer Verzögerung des Fahrzeugs die Steuervorrichtung (15) einen Verzögerungswert ausgehend von jedem der Geschwindigkeitssensoren der Räder des Fahrzeugs gemäß der folgenden Formel berechnet:

$$\gamma\,\text{longiroues} = 2\frac{2\pi R}{N} \times \frac{\dfrac{1}{Tn} - \dfrac{1}{Tn-1}}{Tn + Tn - 1}$$

wobei bedeuten
R : Rollradius des Rads
N : Anzahl von Impulsen pro Drehung des Sensors
Tn, Tn-1 : gegenwärtige und vergangene Periode des vom Sensor gelieferten Rechtecksignals, die umgekehrt proportional zur Drehgeschwindigkeit des Rads sind,
wobei die Steuervorrichtung einen Mittelwert der vier berechneten Werte von Längsverzögerungen für die vier Räder erstellt und die Geschwindigkeit des Fahrzeugs ausgehend von jedem berechneten Verzögerungswert gemäß der folgenden Formel berechnet:

$$V(t) = \frac{2\pi R}{NTn} \times \gamma\,\text{longiroues}\,\frac{Tn + t}{2}$$

wobei t die seit der letzten Anstiegsflanke des Rechtecksignals des Sensors vergangene Zeit ist, und die Steuervorrichtung einen Mittelwert der vier berechneten Geschwindigkeitswerte des Fahrzeugs erstellt.

**10.** System nach einem der vorhergehenden Ansprüche, **dadurch gekennzeichnet, dass** die statische Bremsvorrichtung (7) einen elektrischen Getriebemotor (11) enthält, der mindestens ein Betätigungsseil (12) einer Parkbremse antreibt, die auf die Hinterräder des Fahrzeugs einwirkt, und dass die Steuervorrichtung (15) die Spannkraft in dem Seil (12) berechnet, indem sie das Drehmoment am Ausgang des Elektromotors ausgehend von der Stärke des elektrischen Stroms des Motors und vom Leistungsgrad von dessen Untersetzung bestimmt.

**11.** System nach einem der vorhergehenden Ansprüche, **dadurch gekennzeichnet, dass** die Steuervorrichtung (15) die statische Bremsvorrichtung (7) betätigt, wenn der Fahrer deren Steuerknopf betätigt und gleichzeitig auf das Bremspedal tritt, um einen Notbetrieb zu gewährleisten, wenn die dynamische Bremsvorrichtung (6) außer Betrieb ist.

**12.** System nach einem der vorhergehenden Ansprüche, **dadurch gekennzeichnet, dass** die Steuervorrichtung (15) die dynamische (6) und/oder die statische Bremsvorrichtung (7) aktiviert hält, wenn der Fahrer beim Anhalten des Fahrzeugs den Wahlhebel des Schaltgetriebes in die Leerlauf- oder Neutralstellung bringt, und die Steuervorrichtung (15) keine der dynamischen (6) und statischen Bremsvorrichtungen (7) aktiviert, wenn das Fahrzeug in der Leerlauf- oder der Neutralstellung dieses Hebels anhält.

**13.** System nach einem der vorhergehenden Ansprüche, **dadurch gekennzeichnet, dass** die Steuervorrichtung (15) an die dynamische Bremsvorrichtung (6) und/oder an die statische Bremsvorrichtung (7} im Fall einer Überlastung des Fahrzeugs, die der Steuervorrichtung (15) durch eine manuelle Einwirkung des Fahrers, wie einen Druck während einer vorbestimmten Dauer auf einen Steuerknopf der statischen Bremsvorrichtung (7), angezeigt wird, eine stärkere Bremsdruckanweisung anwendet.

Fig. 1

Fig. 2

FIG. 3A

FIG. 3B

Actions conducteur

FIG. 4A

FIG. 4B

FIG. 5A

FIG. 5B

FIG. 6

FIG. 7

FIG. 8

**RÉFÉRENCES CITÉES DANS LA DESCRIPTION**

**Documents brevets cités dans la description**

- DE 10038786